# EUROPEAN PATENT APPLICATION

(11) **EP 2 837 780 A1**
(43) Date of publication of application: **18.02.2015**
(21) Application number: 13290189.3
(22) Date of filing: 13.08.2013
(51) Int. Cl.: F01M 13/00, F16K 1/36

(54) **Pressure regulating valve**

(71) Applicant: Mann + Hummel GmbH, 71638 Ludwigsburg (DE)
(72) Inventor: de Cara, Gerald, 53210 Soulgé sur Ouette (FR)

(57) **Abstract**

The invention relates to a pressure regulating valve (20) comprising a valve housing (10) having a valve cap (15), a valve closing body (12) disposed within said valve housing (10) and cooperating with a valve seat (16), and a spring (26) which urges said valve closing body (12) away from said valve seat (16).

According to the invention, said valve closing body (12) is molded over said valve cap (15).

## Description

### TECHNICAL FIELD

The field of the invention is that of pressure regulating valves, used for example to regulate the pressure of a fluid (liquid or gas) in an internal combustion engine of a motor vehicle.

### BACKGROUND OF THE INVENTION

It is sought more particularly here below to describe problems existing in the field of air pressure regulating valves used in an internal combustion engine of a motor vehicle. The invention of course is not limited to this particular field of application but is of interest for any valve for controlling flow of a fluid that has to cope with closely related or similar issues and problems.

Traditionally, pressure regulating valves comprise a valve housing, which is open at the top. A cover is fastened over this opening of the valve housing, with a membrane (also called diaphragm) inserted between the cover and the valve housing.

Numerous problems arise when assembling these different parts.

Indeed, assembling operations are relatively numerous and complex to carry out. In particular, before mounting the cover on the valve housing, by press fitting for example, the operator has to place the membrane in an annular groove located at the top of the valve housing. The membrane mounting is often very inaccurate and the membrane can be incorrectly installed.

Also, when mounting the cover on the valve housing, the operator has to tightly assembly these two elements while being careful not to damage the membrane previously fitted into the groove. The membrane can be involuntary moved during the assembly of the cover on top of the valve housing. This is problematic since it is necessary to obtain a perfect tightness of the valve in order to ensure an optimum functioning of the valve.

### SUMMARY OF THE INVENTION

The invention, in at least one embodiment, is aimed especially at overcoming these different drawbacks of the prior art.

More specifically, it is an object of at least one embodiment of the invention to provide an improved pressure regulating valve which is simple to assemble and prevents any mounting error and/or damaging of the membrane.

It is also an object of at least one embodiment of the invention to provide a pressure regulating valve which has a compact and simple design.

Yet another object of at least one embodiment of the invention is to provide a pressure regulating valve with improved tightness and which can function satisfactorily.

A further object of at least one embodiment of the invention is to provide a pressure regulating valve that is highly resistant to temperature and ageing.

The present invention proposes a pressure regulating valve comprising a valve housing having a valve cap, a valve closing body disposed within said valve housing and cooperating with a valve seat, and a spring which urges said valve closing body away from said valve seat.

According to the invention, said valve closing body is molded over said valve cap.

Thus the invention simplifies the assembly of the constituent elements of the pressure regulating valve, by overmolding the valve closing body (a diaphragm for instance) on the valve cap. Indeed, the cap and the overmolded valve closing body form a single-piece element intended to be mounted on the valve housing.

Therefore, contrary to the prior solution which requires the assembly of three distinct elements, the invention only requires an assembly of two main elements, namely the mounting of the cap carrying the overmolded valve closing body, on the valve housing. The manufacture of the pressure regulating valve of the invention is thus easier to implement.

The risk that the valve closing body is deteriorated during the assembly (because of an inaccurate installation for example) is significantly reduced.

According to another aspect of the invention, said valve closing body comprises a movable valve closing portion cooperating with said valve seat and a collar fastened to the periphery of valve cap.

According to another aspect of the invention, movable valve closing portion divides said valve housing into a first chamber in which the valve seat is disposed and a second chamber communicating with the atmosphere.

According to another aspect of the invention, said valve cap comprises a through hole connecting said second chamber to the atmosphere.

According to another aspect of the invention, through hole has a conical shape.

According to another aspect of the invention, said movable valve closing portion comprises a conical portion.

According to another aspect of the invention, said conical portion is molded inside said through hole and separated from said through hole.

The valve closing body is first chemically bonded to the cap by overmolding and a part of said overmolded valve closing body is then separated manually or automatically from the cap, so as to obtain a flexible valve closing body cooperating with the valve seat. Such a solution enables the valve closing body to easily separate from the cap and to be axially movable.

According to another aspect of the invention, said collar rests against the inside wall of said valve housing.

The valve closing body which is molded over the cap therefore ensures a proper tightness of the pressure regulating valve.

According to another aspect of the invention, said spring rests against the bottom surface of said valve housing and urges said valve closing body toward said valve cap.

According to another aspect of the invention, the valve closing body is a diaphragm.

According to another aspect of the invention, the valve closing body is a piston.

According to another aspect of the invention, said valve is disposed in a vent duct communicating between a crankcase of an internal combustion engine and an intake manifold of said engine.

According to another aspect of the invention, said overmolded valve closing body is made of an elastically deformable material, such as elastomer, and the valve cap is made of a rigid material, such as a plastic or thermoplastic.

The material used for the overmolded valve closing body is elastically deformable so that the valve closing body may move between its open and closed position (of the valve seat). "Rigid material" shall mean any material strong enough to withstand mechanical stresses during the assembly of the cap on the valve housing so that the cap is not damaged. The material shall also be slightly flexible in order to allow a press fitting of the cap on the valve housing. Such a feature is advantageous because it enables to have perfect tightness at the attachment surface of the valve housing. It is sufficiently rigid not to be deformed by the pressure difference within the housing, as opposed to the valve closing body which must be flexible enough to move from a closed position to an open position, and vice versa.

### BRIEF DESCRIPTION OF THE DRAWINGS

Other features and advantages of embodiments of the invention shall appear from the following description, given by way of an indicative and non-exhaustive example and from the appended drawings, of which:
- Figure 1 is a schematic sectional view of the different parts, before assembly, forming the pressure regulating valve according to a particular embodiment of the invention;
- Figure 2 is a schematic sectional view of the pressure regulating valve, after assembly of the different parts of Figure 1;
- Figures 3 and 4 are schematic sectional views of the pressure regulating valve of Figure 2 in operation (Figure 3 showing the valve in open position and Figure 4 showing the valve in closed position).

### DETAILED DESCRIPTION

In all of the figures of the present document, identical elements and steps are designated by the same numerical reference sign.

The invention provides an improved pressure regulating valve whose assembly is simple to implement and whose conception ensures a proper tightness of the pressure regulating valve. To that end, the valve closing body is overmolded on the valve housing cover before assembly of the latter one on the valve housing.

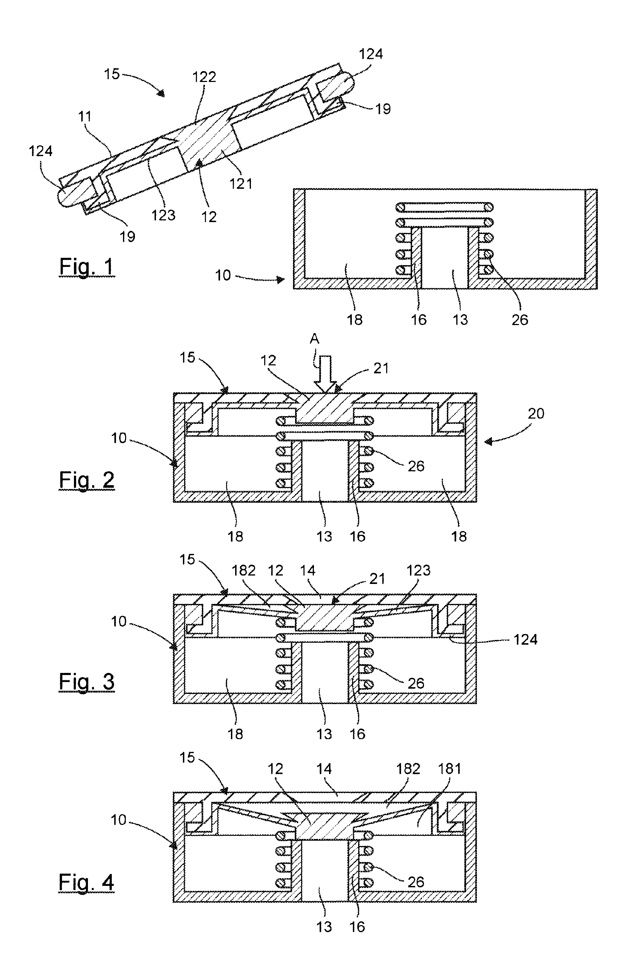

A particular embodiment of the pressure regulating valve of the invention is described in relation to Figures 1 to 4. In this exemplary embodiment, it is intended for installation in the vent line between the crankcase and the intake manifold of an internal combustion engine of a motor vehicle in order to regulate blow-by gases.

However, it is also possible for the pressure regulating valve of the invention to be used for pressure regulation of other fluids (liquids or gases).

The pressure regulating valve of the invention may for instance be employed in an air fuel, or oil circuit of an internal combustion engine of a motor vehicle.

Figure 1 shows a sectional view of the different elements forming the pressure regulating valve before assembly, namely a valve housing 10 and a valve cover, or cap, 15. The valve cover 15 comprises a substrate cover 11 and a membrane 12, which is overmolded on the substrate cover 11.

The pressure regulating valve obtained after assembly of these different elements is represented in Figure 2 with numeral reference 20.

The valve housing 10 is of circular shape and is open at the top. It comprises a bottom surface, or base, and a lateral cylindrical wall extending from the base, the base and wall defining a chamber 18.

The chamber 18 communicates with an air inlet port (not represented) through which gases, which form in the crankcase, enter. A valve seat 16 in the shape of a hollow cylindrical part extends from the bottom surface of the valve housing 10 and defines an air outlet port 13 through which gases are aspirated from the crankcase into the intake manifold.

A compression spring 26 is supported on the bottom surface of the valve housing 10 and surrounds the valve seat 16. As will be seen below, spring 26 supports and urges the valve closing portion of the flexible overmolded membrane 12 (also called a diaphragm) against the valve cover 15, i.e. away from the valve seat 16. Under some specific operating conditions, the valve closing portion of the membrane 12 closes the valve seat 16 against the force of the spring 26.

The circular cover 15 comprises a through hole (or aperture) 14 in its centre. In this example, the through hole 14 has a shape of an inverted truncated cone. In other words, the diameter of the hole 14 on the outer surface of the cover 15 is larger than the diameter of the hole 14 on its inner surface.

The cover 15 comprises an annular shoulder 19 (having a general "L" shape) extending from its inner surface for connecting the cover 15 with the valve body 10.

In order to mold the material forming the membrane 12 over the cover 15, the cover 15 is positioned in an injection mould and molten material is injected in the mold in order to form the membrane 12.

The mold is designed so that molten material designed to form the membrane 12, comes into contact with the inner surface of the cover 15 and fills the through hole 14. The mold is also designed so that the molten material fills the circular groove 20 formed by the shoulder 19 and surrounds the shoulder 19. Once the injected material has solidified, the membrane 12 is bonded to the cover 15 as illustrated in Figure 1.

The cover 15 obtained by such an overmolding step forms a single-piece consisting of the substrate cover 11 and the overmolded membrane 12. The cover 15 can then be mounted on the valve housing 10 as shown in Figure 2.

The assembly of the pressure regulating valve 20 is thus easier to carry out since the approach of the invention requires an assembly of two parts only, i.e. the cover 15 carrying the overmolded membrane 12 and the valve housing 10. It is thus no longer required to position manually the membrane on the valve housing contrary to the prior art solution. The assembly of the pressure regulating valve of the invention is therefore quicker.

Overmolding the membrane 12 on the cover 15 further ensures an accurate positioning of the membrane 12 between the cover 15 and the valve housing 10, as it is no longer necessary to position manually the membrane 12 in a groove of the valve housing as in the prior art approach. The risk that the membrane 12 is damaged during the assembly of the pressure regulating valve 20 is also significantly reduced.

The overmolded membrane 12 extending on the inner surface and on the periphery of the cover 15, the membrane 12 ensures a proper tightness of the pressure regulating valve 20 when the cover 15 is fitted on the valve housing 10, by press fitting or by screwing (figure 2).

In this exemplary embodiment, the diameter of the cover 15 is chosen so that the cover 15 rests on the top end of the wall of the valve housing 10 when the cover 15 is positioned on the valve housing 10. The outside diameter of the shoulder 19 once it is overmolded is substantially equal to the larger diameter of the chamber 18 so that the part of the membrane 12 surrounding the shoulder 19 is in contact with the inner wall of the valve housing 10 when the cover 15 is positioned on the valve housing 10.

In this exemplary embodiment, the membrane 12 is overmolded on the cover 15 so as to form an annular protuberance 124 intended to be compressively deformed during the assembly of the cover 15 on the valve housing 10.

These aspects ensure an optimum tightness of the pressure regulating valve 20 once assembled, and thus minimize the risks of leakage.

In this embodiment, the substrate cover 11 is manufactured from a thermoplastic.

More generally, the material used for manufacturing the substrate cover 11 shall bear the temperature at which the membrane 12 is molded over the substrate cover 11. The material of the substrate cover 11 shall also withstand mechanical stresses during the assembly of the cover 15 on the valve housing 10. Thus, the material chosen must be rigid but also slightly flexible to allow a press fitting of the cover 15 on the valve housing 10.

The membrane 12 is manufactured from an elastomer for instance. The material used for manufacturing the membrane must be adapted to be molded and shaped at high temperatures and to bond with the material of the substrate cover 11 (it must be different from the material used for manufacturing the substrate cover 11).

After assembly of the valve 20, the membrane 12 is bonded to the substrate cover 11, as shown in Figure 2. As will be described below, in operating conditions of the pressure regulating valve 20, part of the overmolded membrane 12, i.e. the valve closing portion of the membrane 12, cooperates with the valve seat 16. In other words, the valve closing portion must be flexible so as to move between an open position of the valve seat 16 and a closed position.

To enable the valve closing portion to be movable between these open and closed position, it is necessary to apply a manual or automatic pressure on the top surface 21 of the membrane 12, i.e. push (as represented by the arrow A of Figure 2) the conical part 122 of the membrane 12 located inside the hole 14 out of this hole 14.

The upper conical part 122, the lower cylindrical part 121 and the surrounding part (or skirt) 123 of the membrane 12 are thus separated from the cover 11 over which they were previously molded. However, the part 124 of the membrane 12 surrounding the shoulder 19 remains bonded to the substrate cover 11 and forms a collar. To that end, materials forming the membrane 12 and the cover 11 are chosen so that the membrane 12 and the cover 11 have a bonding surface that is at least partially detachable (there is thus no chemical adhesive applied in the detachable areas prior to the overmolding step).

Once this step is carried out, the valve closing portion 121, 122, 123 of the membrane 12 is then movable against or away from the valve seat 16.

It is to be noted that the step illustrated in Figure 2 is carried out without deteriorating the tightness of the pressure regulating valve 20.

Also, after this step, the membrane 12 is irreversibly displaced in its active position (Figure 3) with no possible return in the inactive position (Figure 2).

Indeed, the conical part 122 of the closing portion 121, 122, 123 being wider than the inner opening of the through hole 14, the closing portion of the membrane 12 cannot return from its active position (Figure 3) to its inactive position (Figure 2).

Once the pressure regulating valve 20 is activated, the valve closing portion 121, 122, 123 of the overmolded membrane 12 is moveable between an open position (Figure 3) in which the valve opening 13 is opened, allowing blow-by gas to flow from the chamber 18 into the outlet port 13 (as shown by the arrow), and a closed position (Figure 4) in which the outlet port 13 is closed by the valve closing portion which is urged against the valve seat 16. In the closed position, blow-by gas cannot flow through the outlet port 13.

The chamber 18 is divided by the valve closing portion 121, 122, 123 of the flexible membrane 12 into a first chamber 181 that has the valve seat 16, and a second chamber 182 communicating with the ambient atmospheric pressure via the hole 14.

With the valve closing portion 121, 122, 123 in the position shown in Figure 3, gases which form in the crankcase, and enter through the inlet port of the chamber 18, are aspirated through the outlet port 13 toward the intake manifold. As the pressure in the crankcase falls toward a predetermined level, which is lower than the atmospheric pressure, the valve closing portion 121, 122, 123 moves increasingly toward the valve seat 16 until the passage is shut off.

In the closed position of Figure 4, no blow-by gases flow from the crankcase into the intake manifold. As the pressure in the crankcase increases or the pressure in the intake manifold decreases, the valve closing portion 121, 122, 123 will lift off from the valve seat 16.

The pressure regulating valve 20 may be manufactured according to the following method which comprises the steps of:
- providing the substrate cover 11 intended to be mounted on the valve housing 10, the substrate cover 11 having a through hole 14 with an inverted truncated cone shape,
- molding a membrane 12 over part of the substrate cover 11 so as to form a single-piece element or cover 15, the overmolded membrane 12 being intended to ensure the tightness of the pressure regulating valve 20,
- mounting, by press fitting, the cover 15 on the valve body 10, so as to obtain the pressure regulating valve 20,
- applying a pressure A on the part 122 of the overmolded membrane 12 located in the through hole 14 in order to shift irreversibly the membrane 12 from its inactive position to its active position, and make the pressure regulating valve 20 operational.

According to an advantageous aspect of the invention, previously to the overmolding step, a chemical adhesive can be applied to the vicinity of the shoulders 19 of the cover 11, so that the part 124 of the overmolded membrane 12 remains bonded with the substrate cover 15 in this particular area when the membrane 12 is placed into its active (operating) position.

The closing body may not be a membrane or diaphragm but a piston when the valve of the invention is intended to be used as a piston actuator for instance.

Although the present disclosure has been described with reference to one or more examples, workers skilled in the art will recognize that changes may be made in form and detail without departing from the scope of the disclosure and/or the appended claims.

## Claims

1. A pressure regulating valve (20) comprising:
- a valve housing (10) having a valve cap (15),
- a valve closing body (12) disposed within said valve housing (10) and cooperating with a valve seat (16), and
- a spring (26) which urges said valve closing body (12) away from said valve seat (16),
**characterized in that** said valve closing body (12) is molded over said valve cap (15).

2. A pressure regulating valve (20) according to claim 1, **characterized in that** said valve closing body (12) comprises a movable valve closing portion (121, 122, 123) cooperating with said valve seat (16) and a fixed collar (124) fastened to the periphery of the valve cap (15).

3. A pressure regulating valve (20) according to claim 2, **characterized in that** said movable valve closing portion (121, 122, 123) divides said valve housing (10) into a first chamber (181) in which the valve seat (16) is disposed and a second chamber (182) communicating with the atmosphere.

4. A pressure regulating valve (20) according to claim 3, **characterized in that** said valve cap (15) comprises a through hole (14) connecting said second chamber (182) to the atmosphere.

5. A pressure regulating valve (20) according to claim 4, **characterized in that** through hole (14) has a conical shape.

6. A pressure regulating valve (20) according to claim 5, **characterized in that** said movable valve closing portion (121, 122, 123) comprises a conical portion (122).

7. A pressure regulating valve (20) according to claim 6, **characterized in that** said conical portion (122) is molded inside said through hole (14) and separated from said through hole (14).

8. A pressure regulating valve (20) according to any one of claims 2 to 7, **characterized in that** said collar (124) rests against the lateral wall of said valve housing (10).

9. A pressure regulating valve (20) according to any one of claims 1 to 8, **characterized in that** said spring (26) rests against the bottom surface of said valve housing (10) and urges said valve closing body (12) toward said valve cap (15).

10. A pressure regulating valve (20) according to any one of claims 1 to 9, **characterized in that** the valve closing body (12) is a diaphragm

11. A pressure regulating valve (20) according to any one of claims 1 to 9, **characterized in that** the valve closing body (12) is a piston.

12. A pressure regulating valve (20) according to any one of claims 1 to 11, **characterized in that** said pressure regulating valve (20) is disposed in a vent duct communicating between a crankcase of an internal combustion engine and an intake manifold of said engine.

13. A pressure regulating valve (20) according to any one of claims 1 to 12, **characterized in that** said overmolded valve closing body (12) is made of an elastically deformable material and the valve cap (15) is made of a rigid material.

14. A pressure regulating valve (20) according to claim 13, **characterized in that** said overmolded valve closing body (12) is manufactured from an elastomer.

15. A pressure regulating valve (20) according to claim 13 or 14, **characterized in that** said valve cap (15) is manufactured from a plastic.
